# EUROPEAN PATENT APPLICATION

(11) **EP 4 782 315 A1**
(43) Date of publication of application: **29.07.2026**
(21) Application number: 23954578.3
(22) Date of filing: 02.10.2023
(51) Int. Cl.: B62K 11/14, B62J 27/20

(54) **SADDLED VEHICLE**

(71) Applicant: HONDA MOTOR CO., LTD., Tokyo 105-8404 (JP)
(72) Inventor: SHIMIZU Koichiro, Tokyo 107-8556 (JP); SATO Takashi, Wako-shi, Saitama 351-0193 (JP); HATAKEYAMA Takamitsu, Tokyo 107-8556 (JP); MAEHARA Kazunori, Wako-shi, Saitama 351-0193 (JP)
(74) Representative: Kiwit, Benedikt
(86) International application number: PCT/JP2023/035962
(87) International publication number: WO 2025/074479

(57) **Abstract**

It is possible to obtain a handle-installed type airbag that makes it easier to ensure a space for disposing an airbag unit, and also to make it easier to ensure handle rigidity. In a saddle-ride vehicle including a head pipe (18), a handle (21) mounted to the head pipe (18), and an airbag unit (61) capable of deploying an airbag (65), the handle (21) includes left and right handle pipe portions (21b) that extend to outer sides in a vehicle width direction above the head pipe (18), and a cross pipe (21c) that bridges the left and right handle pipe portions (21b), and at least a part of the airbag unit (61) is disposed in a space between the left and right handle pipe portions (21b) and the cross pipe (21c).

## Description

### [Technical Field]

The present invention relates to a saddle-ride vehicle.

### [Background Art]

A saddle-ride vehicle including a head pipe, a handle mounted to the head pipe, and an airbag unit capable of deploying an airbag has been known. For vehicles of this type, an airbag of a vehicle body frame supported type has been proposed. In this airbag, the airbag unit is supported above a middle portion of the handle toward a rear side that is a rider side by supporting an airbag support post directed diagonally rearward and upward on the head pipe configured of a part of a vehicle body frame, and supporting the airbag unit on this airbag support post (see, for example, PTL1).

### [Citation List]

### [Patent Literature]

[PTL1] JP 416264 B

### [Summary of Invention]

### [Technical Problem]

However, in the above-mentioned related art, a dedicated stay for mounting the airbag is used, but there has been a possibility that, when this stay is used, the stay cannot be adopted depending on the vehicle type. Thus, it is conceivable to install the airbag unit to a handle that is not a dedicated component of an airbag. However, in case of attempting to achieve a handle-installed type airbag in which the airbag unit is supported on the handle, there has been a possibility that, when the airbag unit is simply supported on the handle, the handle rigidity is reduced due to the influence of the weight of the airbag unit.

Further, when a configuration in which the handle is made thicker or a configuration similar to an airbag support post is adopted in the handle in order to ensure the handle rigidity, problems such as restriction in a space for disposing the airbag unit arise.

The present invention has been made in view of the above-mentioned circumstances, and has an object to be capable of obtaining a handle-installed type airbag that makes it easier to ensure a space for disposing the airbag unit, and also to make it easier to ensure the handle rigidity.

### [Solution to Problem]

In a saddle-ride vehicle including a head pipe, a handle mounted to the head pipe, and an airbag unit capable of deploying an airbag, the handle includes left and right handle pipe portions that extend to outer sides in a vehicle width direction above the head pipe, and a cross pipe that bridges the left and right handle pipe portions, and at least a part of the airbag unit is disposed in a space between the left and right handle pipe portions and the cross pipe.

### [Advantageous Effects of Invention]

It is possible to obtain a handle-installed type airbag that makes it easier to ensure a space for disposing the airbag unit, and it becomes easier to ensure the handle rigidity.

### [Brief Description of Drawings]

[Fig. 1] Fig. 1 is a side view of a saddle-ride vehicle according to an embodiment of the present invention.
[Fig. 2] Fig. 2 is a perspective view illustrating a handle of the saddle-ride vehicle together with a surrounding configuration.
[Fig. 3] Fig. 3 is a view illustrating a state in which the handle and an airbag unit are separated.
[Fig. 4] Fig. 4 is a view illustrating, from a rear side, the airbag unit together with the surrounding configuration.
[Fig. 5] Fig. 5 is a view illustrating, from a lateral side, the airbag unit together with the surrounding configuration.
[Fig. 6] Fig. 6 is a view illustrating, from an upper side, the airbag unit together with the surrounding configuration.
[Fig. 7] Fig. 7 is a cross-sectional view illustrating the handle together with the surrounding configuration at a vehicle width center.
[Fig. 8] Fig. 8 is a perspective view illustrating a disposing structure of the airbag unit according to a first modification example.
[Fig. 9] Fig. 9 is a side view illustrating the disposing structure of the airbag unit according to the first modification example.
[Fig. 10] Fig. 10 is a view illustrating, from the rear side, the airbag unit according to a second modification example together with a surrounding configuration.
[Fig. 11] Fig. 11 is a view illustrating, from the lateral side, the airbag unit according to the second modification example together with the surrounding configuration.

### [Description of Embodiments]

An embodiment of the present invention will be described below with reference to the drawings. Unless otherwise mentioned, directions including front-rear, left-right, and up-down mentioned in the description are the same as those directions relative to a vehicle body. Reference signs FR, UP, and LH shown in the drawings indicate a vehicle body front side, a vehicle body upper side, and a vehicle body left side, respectively.

### [Embodiment]

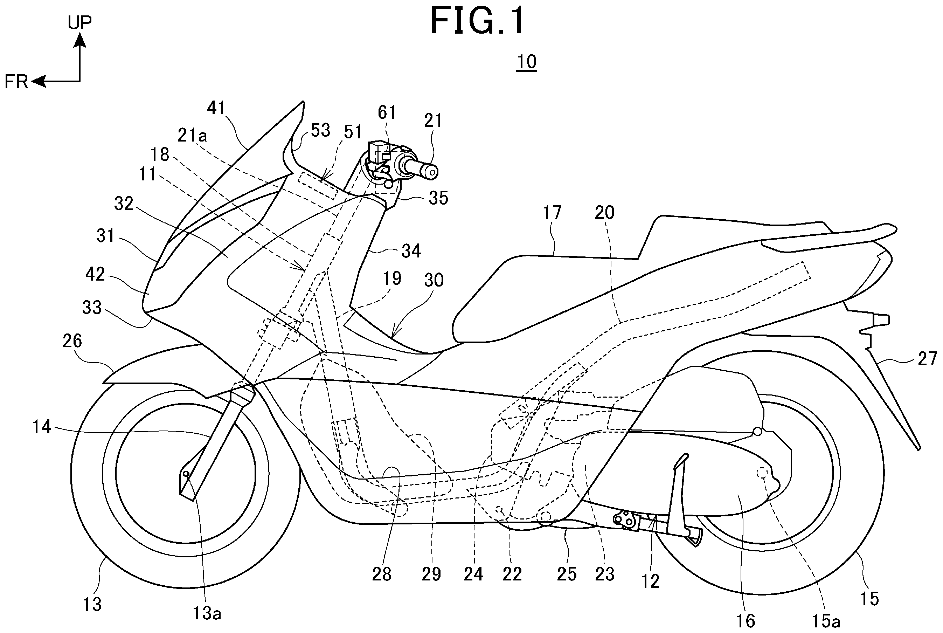

Fig. 1 is a side view of a saddle-ride vehicle 10 according to an embodiment of the present invention.

The saddle-ride vehicle 10 is a vehicle including a vehicle body frame 11, a power unit 12 supported on the vehicle body frame 11, a front fork 14 that supports a front wheel 13 in a steerable manner, a swing arm 16 that supports a rear wheel 15, and a seat 17 for a rider.

The saddle-ride vehicle 10 is a vehicle on which the rider sits astride the seat 17. The seat 17 is provided above a rear part of the vehicle body frame 11.

The vehicle body frame 11 includes a head pipe 18 provided at a front end portion of the vehicle body frame 11, a front frame 19 located on a rear side of the head pipe 18, and a rear frame 20 located on a rear side of the front frame 19. A front end portion of the front frame 19 is connected to the head pipe 18.

The seat 17 is supported on the rear frame 20.

The front fork 14 is supported on the head pipe 18 in such a manner that it can be steered left and right. The front wheel 13 is supported on an axle 13a provided at a lower end portion of the front fork 14. A handle 21 for steering that the rider grasps is mounted at an upper end portion of the front fork 14.

The swing arm 16 is supported on a pivot shaft 22 that is supported on the vehicle body frame 11. The pivot shaft 22 is a shaft extending horizontally in a vehicle width direction. The pivot shaft 22 is passed through a front end portion of the swing arm 16. The swing arm 16 swings up and down around the pivot shaft 22.

The rear wheel 15 is supported on an axle 15a provided at a rear end portion of the swing arm 16.

The power unit 12 is disposed between the front wheel 13 and the rear wheel 15 and supported on the vehicle body frame 11.

The power unit 12 is an internal combustion engine. The power unit 12 includes a crankcase 23 and a cylinder 24 that houses a reciprocating piston. An exhaust device 25 is connected to an exhaust port of the cylinder 24.

An output of the power unit 12 is transmitted to the rear wheel 15 through a drive power transmission member that connects the power unit 12 and the rear wheel 15 to each other.

The saddle-ride vehicle 10 further includes a front fender 26 that covers the front wheel 13 from above, a rear fender 27 that covers the rear wheel 15 from above, footrests 28 on which the rider places his or her feet, and a fuel tank 29 that stores fuel to be used by the power unit 12.

The front fender 26 is mounted on the front fork 14. The rear fender 27 and the footrests 28 are provided on a lower side relative to the seat 17. The fuel tank 29 is supported on the vehicle body frame 11.

The saddle-ride vehicle 10 of this embodiment is a scooter-type saddle-ride vehicle including the seat 17 on which a rider such as a driver sits astride. The power unit 12 of the saddle-ride vehicle 10 is a unit swing engine in which an internal combustion engine (also called an engine) serving as a drive source of the rear wheel 15 and the swing arm 16 that supports the rear wheel 15 are integrally formed. The footrests 28 on which the rider places his or her left and right feet are a pair of step floors provided on the left and right sides in front of and below the seat 17.

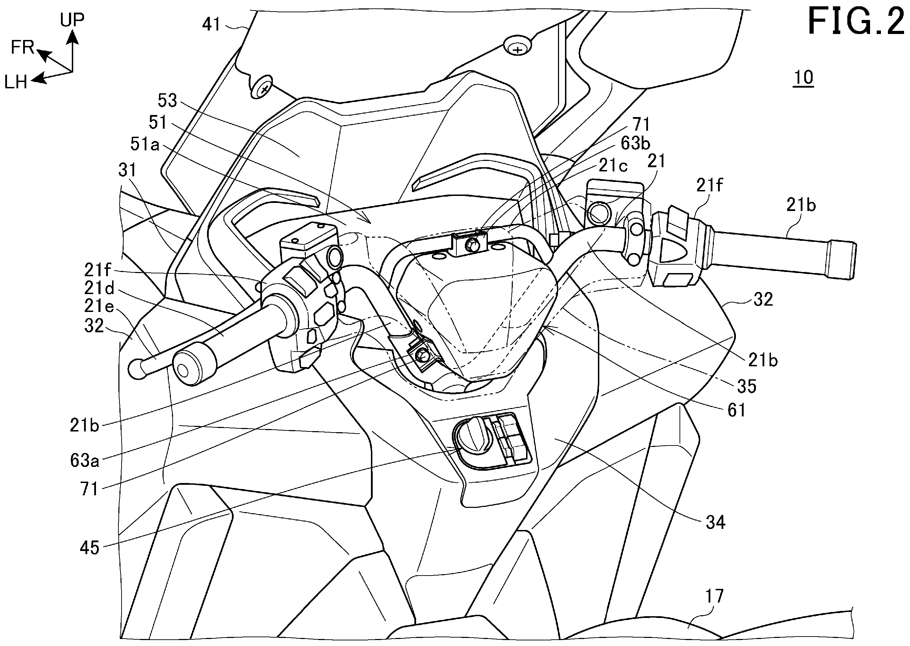

Fig. 2 is a perspective view illustrating the handle 21 of the saddle-ride vehicle 10 together with a surrounding configuration.

As illustrated in Fig. 1 and Fig. 2, the saddle-ride vehicle 10 includes a vehicle body cover 30 that covers the vehicle body such as the vehicle body frame 11. The vehicle body cover 30 includes a front cover 31 that covers vehicle body front part constituent members such as the head pipe 18 from the front side, a pair of left and right front side covers 32 that cover the vehicle body front part constituent members such as the head pipe 18 from outer sides in a vehicle width direction, and a lower surface cover 33 that is disposed below the front cover 31 and between the left and right front side covers 32. Moreover, the vehicle body cover 30 includes an inner cover 34 that covers the vehicle body front part constituent members such as the head pipe 18 from the rear side, and a handle cover 35 that covers a predetermined region of the handle 21.

It is to be noted that, in Fig. 2, the handle cover 35 is indicated by a two-dot chain line.

A windscreen 41 is provided on an upper portion of a front surface part of the front cover 31. A headlamp 42 that illuminates the front side of the saddle-ride vehicle 10 is provided on a lower portion of the front surface part of the front cover 31.

A main switch 45 located on the rear side of the handle cover 35 is provided on an upper portion of the inner cover 34. The main switch 45 is a switch that turns on and off an electric circuit included in the saddle-ride vehicle 10, locks or unlocks steering of the handle 21, unlocks the seat 17, and unlocks a lid that covers a fuel cap provided in the fuel tank 29.

A meter 51 is provided on the rear side of the front cover 31 and on the front side of the handle 21. The meter 51 functions as an information display unit that displays information related to the saddle-ride vehicle 10, such as a vehicle speed. The meter 51 is disposed at a vehicle width center at a position lower than a cross pipe 21c of the handle 21. The meter 51 is disposed in such a manner that a display surface 51a on the upper surface is inclined rearward such that the driver on the upper rear side can easily view the meter 51.

The meter 51 is fixed to the vehicle body, and hence the meter 51 does not move left or right even when the handle 21 is steered left or right. It is to be noted that the meter 51 may be fixed to the handle 21, and the meter 51 may be moved left or right in response to the steering of the handle 21.

A visor 53 that covers the meter 51 from the upper front side is provided on the front cover 31. The visor 53 is an eave-shaped member that extends rearward and upward on the front side of the meter 51.

The windscreen 41 is made of a raw material having transmittance such that the rider can visually recognize the front side through the windscreen 41. The visor 53 is provided to block light reaching the upper surface of the meter 51 from the upper front side. The visor 53 is non-transparent and has transmittance lower than that of the windscreen 41.

The handle cover 35 covers a left-right middle portion of the handle 21. It is to be noted that the vehicle body cover 30 including the handle cover 35 is made of a resin material, but the vehicle body cover 30 may be made of a material other than a resin material.

As illustrated in Fig. 2, an airbag unit 61 that protects the rider from an impact is supported on a left-right middle portion of the handle 21, which is a region covered with the handle cover 35. A portion of the handle cover 35 that covers at least the rear side of the airbag unit 61 is formed to be detachable, and does not hinder deploying of the airbag from the airbag unit 61 to the rear side that is the rider side. The handle cover 35 is non-transparent, and the airbag unit 61 is invisible externally by the handle cover 35.

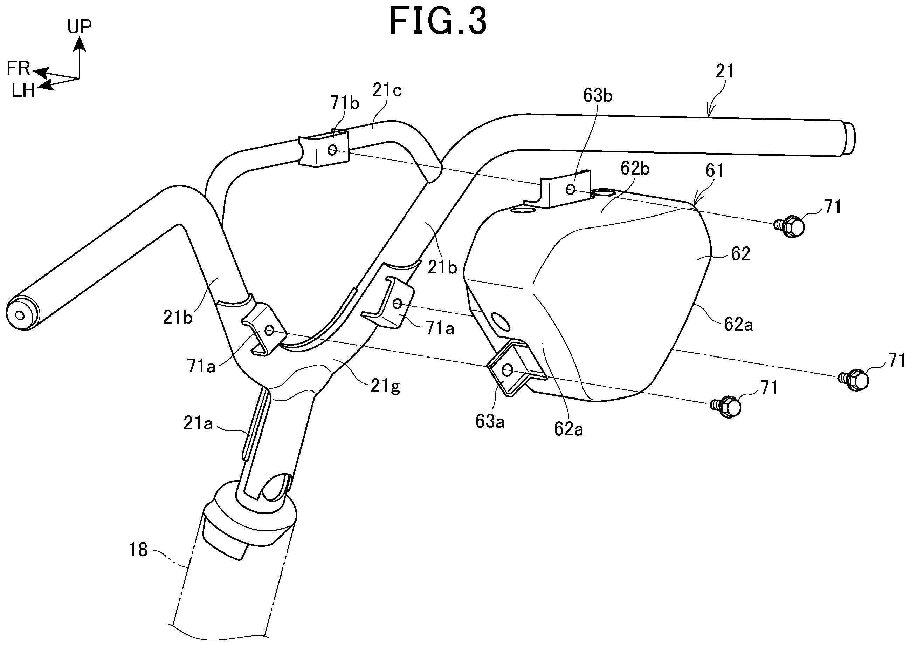

Fig. 3 is a view illustrating a state in which the handle 21 and the airbag unit 61 are separated. Reference sign LC in Fig. 3 denotes a plane extending in the vehicle body up-down and vehicle body front-rear directions at the vehicle width center, and is hereinafter referred to as a vehicle width center LC as appropriate.

As illustrated in Fig. 3, the handle 21 includes a steering shaft 21a rotatably supported on the head pipe 18, left and right handle pipe portions 21b supported on an upper portion of the steering shaft 21a, and the cross pipe 21c that bridges the left and right handle pipe portions 21b. When the handle 21 is located at a left-right neutral position (corresponding to a handle position at the time of traveling straight), the handle 21 has a laterally symmetrical shape with respect to the vehicle width center LC. However, the shapes of the respective portions of the handle 21 may be changed as appropriate.

The head pipe 18 and the steering shaft 21a extend toward the upper rear side. The left and right handle pipe portions 21b extend to the upper rear side from the upper portion of the steering shaft 21a and have a shape that extends to outer sides in the vehicle width direction. As illustrated in Fig. 2, the left and right handle pipe portions 21b are provided with grip portions 21d to be held by the rider at end portions thereof on the outer sides in the vehicle width direction, and operating levers 21e that function as brake levers are provided on the front side of the grip portions 21d. Handle switches 21f are provided on inner sides in the vehicle width direction of the left and right grip portions 21d.

As illustrated in Fig. 3, a reinforcing portion 21g that reinforces the handle 21 is provided at a lower part of the handle 21. The reinforcing portion 21g is attached to cover a part in which the left and right handle pipe portions 21b and the steering shaft 21a are coupled from the vehicle body back side to reinforce the part. The reinforcing portion 21g is, for example, a plate member made of metal, and is also called a gusset plate.

Left and right first fixing portions 71a to which fastening members 71 can be fastened are fixed from the rear side to regions of the reinforcing portion 21g to be attached to the left and right handle pipe portions 21b. Those first fixing portions 71a are provided at the same height and are provided to overlap the handle pipe portions 21b in the vehicle body front-rear direction, and do not protrude upward, downward, leftward, or rightward from the handle pipe portions 21b.

Each of the left and right first fixing portions 71a has a structure in which both longitudinal ends of a plate member having rigidity are bent into an L-shape and a female thread portion is provided in a longitudinal middle region, and both end portions thereof are joined to the handle pipe portions 21b by welding or the like. It is to be noted that the shape and structure of the first fixing portions 71a may be changed as appropriate.

Both ends of the cross pipe 21c of the handle 21 are joined by welding or the like to the front surfaces of the left and right handle pipe portions 21b at positions higher than the left and right first fixing portions 71a. The cross pipe 21c extends along the vehicle width direction and is connected to the left and right handle pipe portions 21b at the same height. The cross pipe 21c is made of a pipe material having rigidity, reinforces the left and right handle pipe portions 21b, and suppresses deformation of the handle 21.

Here, the left and right handle pipe portions 21b are separated to the left and right sides as they go upward, and upper portions thereof that are relatively separated are coupled via the cross pipe 21c, which effectively suppresses deformation of the handle 21 and contributes to improvement in rigidity of the handle 21.

A second fixing portion 71b to which the fastening member 71 can be fastened is fixed from the rear side to the left-right middle of the cross pipe 21c. Accordingly, the second fixing portion 71b is located at the vehicle width center LC while facing rearward and being located above the first fixing portions 71a. The shape and the structure of the second fixing portion 71b are similar to those of the first fixing portions 71a. The second fixing portion 71b is provided so as to overlap the cross pipe 21c in the vehicle body front-rear direction, and does not protrude upward, downward, leftward, or rightward from the cross pipe 21c, or the amount of protrusion in the up-down direction or the like is suppressed.

It is to be noted that the shape and the structure of the second fixing portion 71b may be changed as appropriate as well.

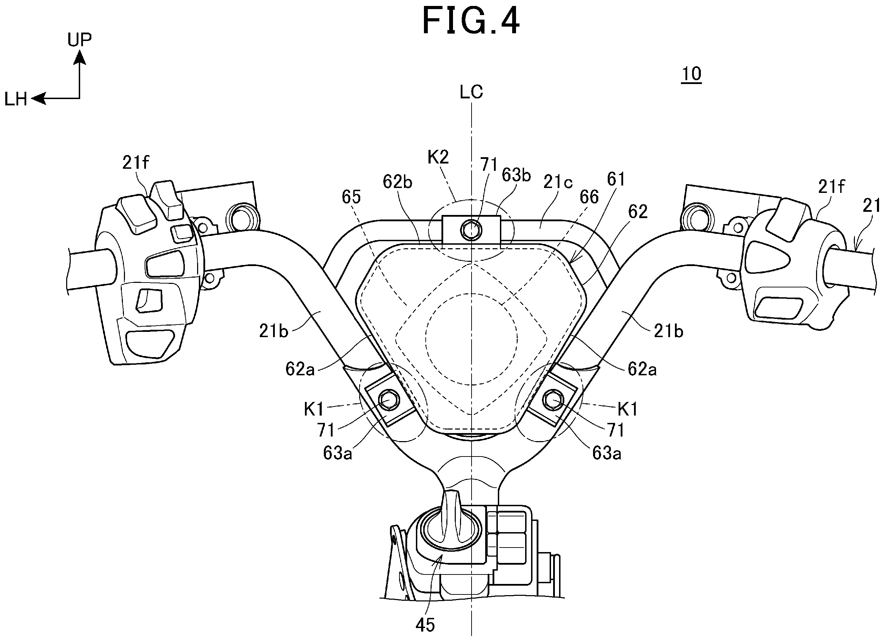

The airbag unit 61 includes a case 62 configured of a hollow box body. In the case 62, a folded-state airbag 65 (Fig. 4) is housed, and an inflator 66 (Fig. 4) that generates gas to inflate the airbag 65 is housed.

The case 62 has an outer shape that fits into an opening shape defined between the left and right handle pipe portions 21b and the cross pipe 21c. In the case 62 of this configuration, left and right side surfaces 62a are formed as inclined surfaces that incline along the left and right handle pipe portions 21b, in other words, formed as surfaces that extend to the outer sides in the vehicle width direction as they go upward. Further, an upper surface 62b of the case 62 is formed as a surface that extends in the vehicle width direction along the cross pipe 21c, that is, a horizontal surface that extends in the vehicle width direction.

The case 62 of this configuration is formed as, as illustrated in Fig. 3, a box body having a triangular shape as viewed in the vehicle body front-rear direction, more specifically, a shape obtained by rounding each corner portion of a box body having a triangular shape. However, the shape is not limited thereto, and the shape of the case 62 may be changed as appropriate.

First stays 63a configured of left and right sideward protruding portions protruding left and right are fixed to the left and right side surfaces 62a. A second stay 63b configured of an upward protruding portion protruding upward is fixed to the upper surface 62b of the case 62. Each of the stays 63a and 63b is made of a plate member having rigidity and has an insertion hole through which the fastening member 71 can be inserted. The fastening members 71 are respectively passed through the first stays 63a and the second stay 63b, and the fastening members 71 are respectively fastened to the first fixing portions 71a and the second fixing portion 71b of the handle 21. Thus, the airbag unit 61 is detachably fixed to the handle. All of the fastening members 71 are fastened from the same direction (the rear side), and hence the work of mounting and detaching the airbag unit 61 is easy.

It is to be noted that the fastening member 71 is not particularly limited, and may be, for example, a widely available bolt.

Fig. 4, Fig. 5, and Fig. 6 are views illustrating, from the rear side, the lateral side, and the upper side, respectively, the airbag unit 61 fixed to the handle 21 together with the surrounding configuration.

As illustrated in Fig. 4, the airbag unit 61 is disposed in a space between the left and right handle pipe portions 21b and the cross pipe 21c as viewed in the vehicle body front-rear direction. As illustrated in Fig. 4, the airbag 65 and the inflator 66 are housed in the case 62 of the airbag unit 61.

As illustrated in Fig. 4, fixing locations K1 of the airbag unit 61 to the left and right handle pipe portions 21b and a fixing location K2 of the airbag unit 61 to the cross pipe 21c are provided at angles and distances that can be regarded as equiangular intervals (120 degrees in this configuration) and equal distances with reference to the inflator 66. Accordingly, an inflator reaction force at the time of airbag deployment is easily received evenly by the left and right handle pipe portions 21b and the cross pipe 21c, which is advantageous in ensuring the support strength for the airbag unit 61.

Further, the left and right side surfaces 62a of the case 62 are surfaces provided along the left and right handle pipe portions 21b, and the upper surface 62b of the case 62 is a surface provided along the cross pipe 21c, and hence it is easy to increase the volume of the case 62 while utilizing the space surrounded by the left and right handle pipe portions 21b and the cross pipe 21c. Accordingly, it becomes easier to ensure the space for housing the airbag 65 and the inflator 66.

It is to be noted that the case 62 of the airbag unit 61 has a cleavage location that cleaves when the airbag 65 deploys. The cleavage location is cleaved by the airbag 65 expanding with gas from the inflator 66, thus allowing the airbag 65 to smoothly deploy toward the rear side that is the rider side. The positions and numbers of the fixing locations K1 and K2 illustrated in Fig. 4 may be changed as appropriate, and the fixing locations K1 and K2 may have a fixing structure other than a fastening structure.

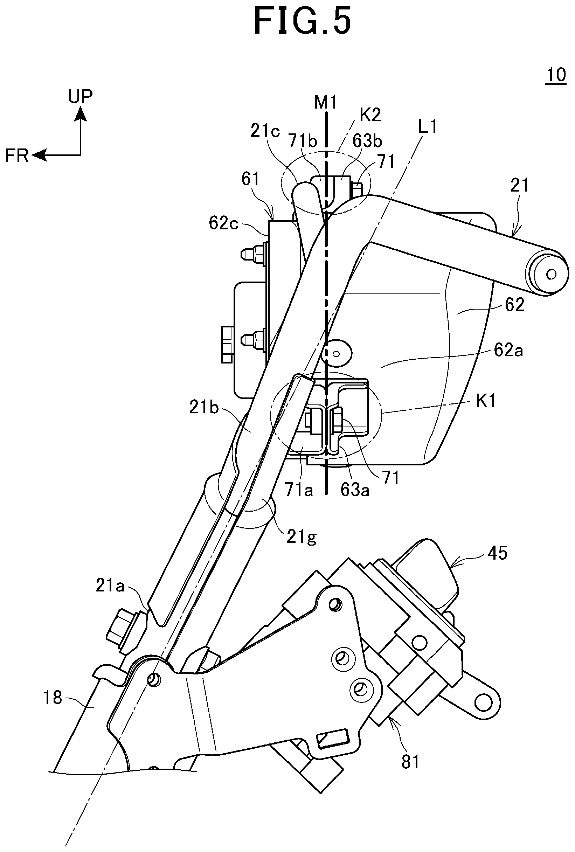

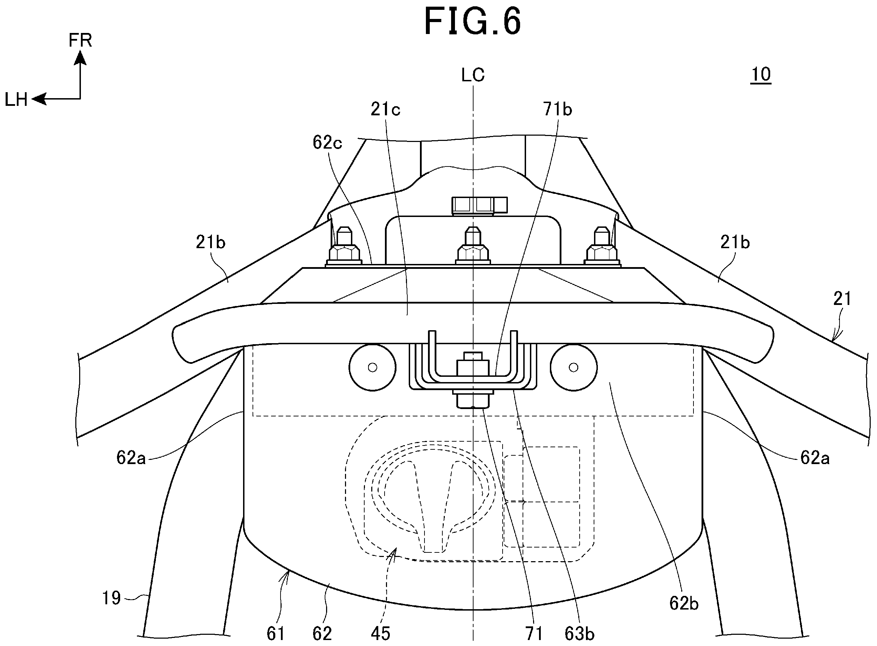

As illustrated in Fig. 5 and Fig. 6, the airbag unit 61 is disposed at a position at which it overlaps the left and right handle pipe portions 21b in the vehicle width direction, and also overlaps the cross pipe 21c in the up-down direction. This allows the space between the left and right handle pipe portions 21b and the cross pipe 21c to be effectively used as a space for disposing the airbag unit 61 and allows the airbag unit 61 to be laid out in a compact manner on the handle 21. Further, it becomes easier to reduce the amount of protrusion of the airbag unit 61 from the handle 21. Moreover, the left and right handle pipe portions 21b and the cross pipe 21c can also serve as a guard member for the airbag unit 61.

As illustrated in Fig. 5, the head pipe 18 extends toward the upper rear side in vehicle body side view. Further, the steering shaft 21a and the left and right handle pipe portions 21b extend toward the upper rear side along a center axis L1 of the head pipe 18. Further, the cross pipe 21c crosses the vehicle body front side relative to the center axis L1 of the head pipe 18 in the vehicle width direction. The cross pipe 21c is located on the vehicle body front side relative to the center axis L1 of the head pipe 18 and the handle pipe portions 21b, and hence the airbag unit 61 mounted to the cross pipe 21c can be mounted toward the rider on the rear side. This allows the airbag 65 to deploy in a direction appropriate for absorbing an impact on the rider. As illustrated in Fig. 5, a switch unit 81 including the main switch 45 is disposed below the airbag unit 61.

In this configuration, as illustrated in Fig. 5, a common plane M1 passing through the fixing locations K1 of the airbag unit 61 to the left and right handle pipe portions 21b and the fixing location K2 of the airbag unit 61 to the cross pipe 21c is perpendicular to the ground on which the saddle-ride vehicle 10 travels. Accordingly, it becomes easier to dispose the airbag unit 61 so that the airbag 65 can deploy in a direction appropriate for absorbing the impact on a rider on the rear side.

It is to be noted that the plane M1 is not required to be limited to be perpendicular to the ground, and may have an angle within a predetermined range (for example, within a range of +30 degrees to -30 degrees) from the angle perpendicular to the ground.

Fig. 5 exemplifies a case where the handle 21 is at a left-right neutral position (corresponding to a handle position at the time of traveling straight), but even when the handle 21 is not at the left-right neutral position, the above-mentioned plane M1 may be perpendicular to the ground or have an angle within a predetermined range from the angle perpendicular to the ground. It is to be noted that the plane M1 may be changed to have an appropriate angle as long as the airbag unit 61 can be disposed toward the rider on the rear side.

In Fig. 5, Fig. 6, and others, the front portion of the airbag unit 61 is denoted by reference sign 62c.

As illustrated in Fig. 6, the airbag unit 61 is located on the rear side relative to the frontmost surfaces of the left and right handle pipe portions 21b in vehicle body top view. Further, the airbag unit 61 is covered with the cross pipe 21c from above across the vehicle width direction.

In vehicle body top view, the airbag unit 61 is located on the rear side relative to the frontmost surfaces of the left and right handle pipe portions 21b, and hence the airbag unit 61 is less liable to come into contact with other components (for example, a brake pipe) disposed on the front side of the left and right handle pipe portions 21b and does not interfere with the arrangement of other components.

If the airbag unit 61 is disposed on the front side relative to the frontmost surfaces of the handle pipe portions 21b, it is required to increase the size of the handle cover 35 to the front side. This configuration can also obtain such an effect that it is possible to avoid increase in size of the handle cover 35 to the front side.

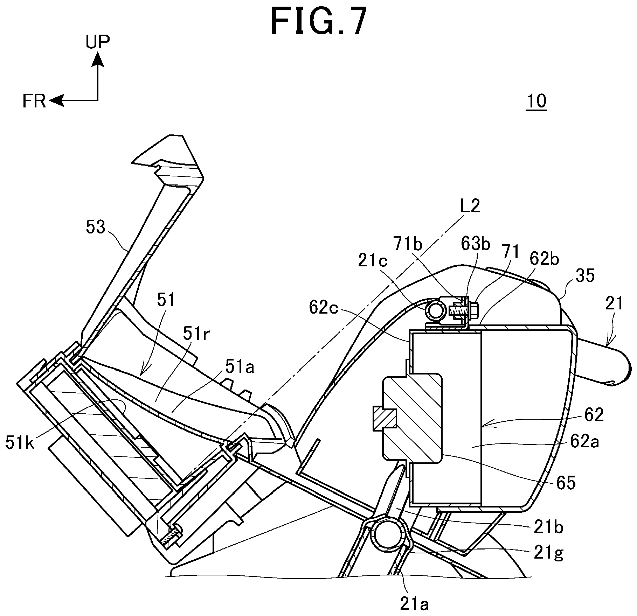

Fig. 7 is a cross-sectional view illustrating the handle 21 together with the surrounding configuration at the vehicle width center LC.

As illustrated in Fig. 7, the meter 51 is provided on the front side of the handle 21 and the airbag unit 61, and is provided below the cross pipe 21c. The meter 51 includes a substrate 51k that integrally includes at least one of instruments or a liquid crystal panel, and the substrate 51k is covered with a transparent lens cover 52r from above so that the rider can visually recognize the substrate 51k through the lens cover 52r. It is to be noted that the lens cover 52r configures the display surface 51a illustrated in Fig. 2.

The substrate 51k is mounted to the front cover 31 including the visor 53 at a posture inclined rearward, and a surface facing the upper rear side corresponds to the information display region that displays information.

As illustrated in Fig. 7, a perpendicular line L2 extending from a lower end of the substrate 51k (corresponding to a lower end of the information display region) in a direction perpendicular to the substrate 51k is located on the upper front side relative to the left and right handle pipe portions 21b and the cross pipe 21c that configure the handle 21, and the handle cover 35. Accordingly, the handle 21 and the handle cover 35 do not hinder the visibility of the meter 51.

Further, the above-mentioned perpendicular line L2 is located on the upper front side relative to the airbag unit 61, and hence the airbag unit 61 does not also hinder the visibility of the meter 51.

It is to be noted that Fig. 7 illustrates a state in which the handle 21 is at a left-right neutral position (at the time of traveling straight), but even when the handle 21 is steered left or right, the above-mentioned perpendicular line L2 is located on the upper front side relative to the handle 21, the handle cover 35, and the airbag unit 61. This prevents the visibility of the meter 51 from being hindered even when the handle 21 is steered left or right.

As described above, in this embodiment, as illustrated in Fig. 4, the handle 21 includes the left and right handle pipe portions 21b that extend to outer sides in the vehicle width direction above the head pipe 18, and the cross pipe 21c that bridges the left and right handle pipe portions 21b, and the airbag unit 61 is disposed in a space between the left and right handle pipe portions 21b and the cross pipe 21c. With this configuration, it is possible to obtain a handle-installed type airbag that makes it easier to ensure a space for disposing the airbag unit 61 by utilizing the space between the left and right handle pipe portions 21b and the cross pipe 21c, and it becomes easier to ensure the handle rigidity.

As illustrated in Fig. 5, the cross pipe 21c crosses the vehicle body front side relative to the center axis L1 of the head pipe 18 in the vehicle width direction, and hence the airbag unit 61 mounted to the cross pipe 21c can be easily mounted toward the rider on the rear side, and the airbag 65 can easily deploy in a direction appropriate for absorbing an impact on the rider.

As illustrated in Fig. 7, the meter 51 is included on the front side of the handle 21, and the cross pipe 21c is located on the rear side relative to the perpendicular line L2 extending from the lower end of the information display region of the meter 51 in the direction perpendicular to the information display region, and hence it becomes easier to dispose the airbag unit 61 without hindering the visibility of the meter 51.

Further, the airbag unit 61 is housed in a space between the left and right handle pipe portions 21b and the cross pipe 21c as viewed in the vehicle body front-rear direction illustrated in Fig. 4, and hence the airbag unit 61 can be disposed in a compact manner by utilizing a dead space between the left and right handle pipe portions 21b and the cross pipe 21c.

In addition, the airbag unit 61 is located below the cross pipe 21c and overlaps the cross pipe 21c in the vehicle body up-down direction, and hence the cross pipe 21c can also serve as a guard member that protects the airbag unit 61 from directly above.

Moreover, the airbag unit 61 overlaps the left and right handle pipe portions 21b in vehicle body side view, and hence the handle pipe portions 21b can also serve as guard members that protect the airbag unit 61 from lateral sides.

Further, as illustrated in Fig. 3, the reinforcing portion 21g that reinforces the lower portions of the left and right handle pipe portions 21b is included, and the reinforcing portion 21g includes the left and right first fixing portions 71a to which the first stays 63a configured of sideward protruding portions protruding left and right from the airbag unit 61 are to be respectively fixed, and the cross pipe 21c includes the second fixing portion 71b to which the second stay 63b configured of the upward protruding portion protruding upward from the airbag unit 61 is to be fixed. With this configuration, while the space for disposing the airbag unit 61 is ensured by utilizing the space between the left and right handle pipe portions 21b and the cross pipe 21c, the support strength for the airbag unit 61 onto the handle 21 is easily ensured.

Further, as illustrated in Fig. 5, the common plane M1 passing through the fixing locations of the airbag unit 61 to the left and right handle pipe portions 21b and the cross pipe 21c is perpendicular to the ground or has an angle within a predetermined range from an angle perpendicular to the ground, and hence it becomes easier to dispose the airbag unit 61 such that the airbag 65 can deploy in a direction appropriate for absorbing the impact on the rider on the rear side.

The above-mentioned embodiment shows one aspect of the present invention. The present invention is not limited to the above-mentioned embodiment, and detailed configurations and the like may be changed as appropriate.

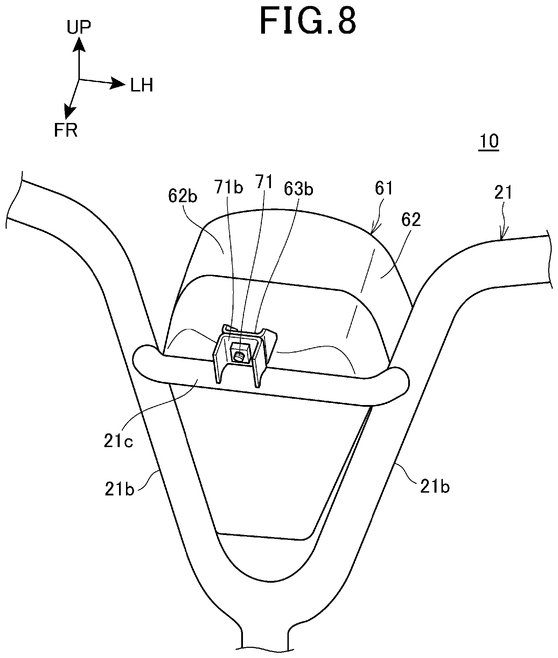

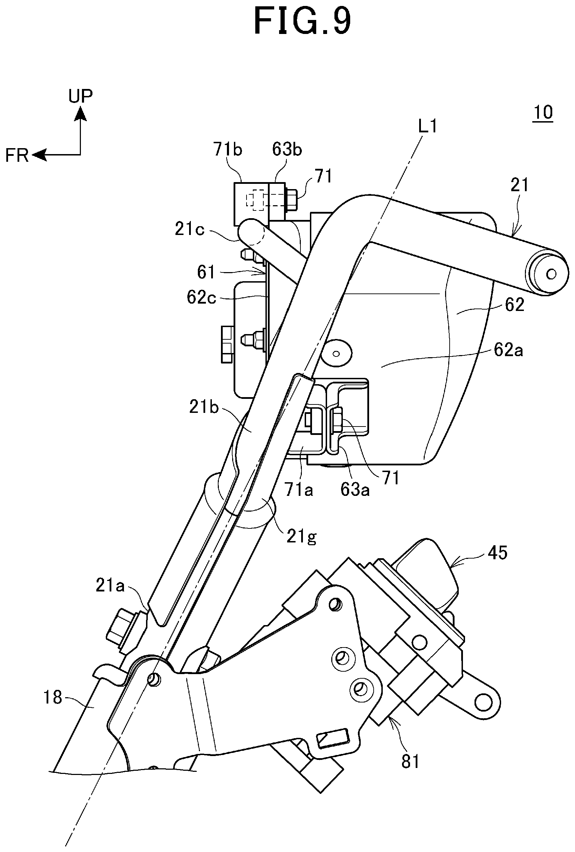

Fig. 8 and Fig. 9 are views illustrating a disposing structure of the airbag unit 61 according to a first modification example. The first modification example is different from the above-mentioned embodiment in that the cross pipe 21c is located on the front side of the airbag unit 61 and the front portion 62c of the airbag unit 61 is fixed to the cross pipe 21c by the same fixing structure as the above-mentioned fixing location K2.

The front portion 62c of the airbag unit 61 is fixed to the cross pipe 21c and the first fixing portions 71a provided on the left and right of the airbag unit 61 are fixed to the left and right handle pipe portions 21b, and hence the cross pipe 21c can easily receive the inflator reaction force at the time of airbag deployment. Thus, with the rigidity of the cross pipe 21c being increased, it is possible to sufficiently adapt to the inflator reaction force at the time of airbag deployment.

As illustrated in Fig. 9, the airbag unit 61 is located on the rear side of the cross pipe 21c and overlaps the cross pipe 21c in the vehicle body front-rear direction. This provides an effect of allowing the cross pipe 21c to also serve as a guard member that protects the airbag unit 61 from the front side.

It is to be noted that, as illustrated in Fig. 9, also in the first modification example, similarly to the above-mentioned embodiment, the cross pipe 21c crosses the vehicle body front side relative to the center axis L1 of the head pipe 18 in the vehicle width direction. This makes it easier to mount the airbag unit 61 toward the rider on the rear side, and makes it easier for the airbag 65 to deploy in a direction appropriate for absorbing an impact on the rider.

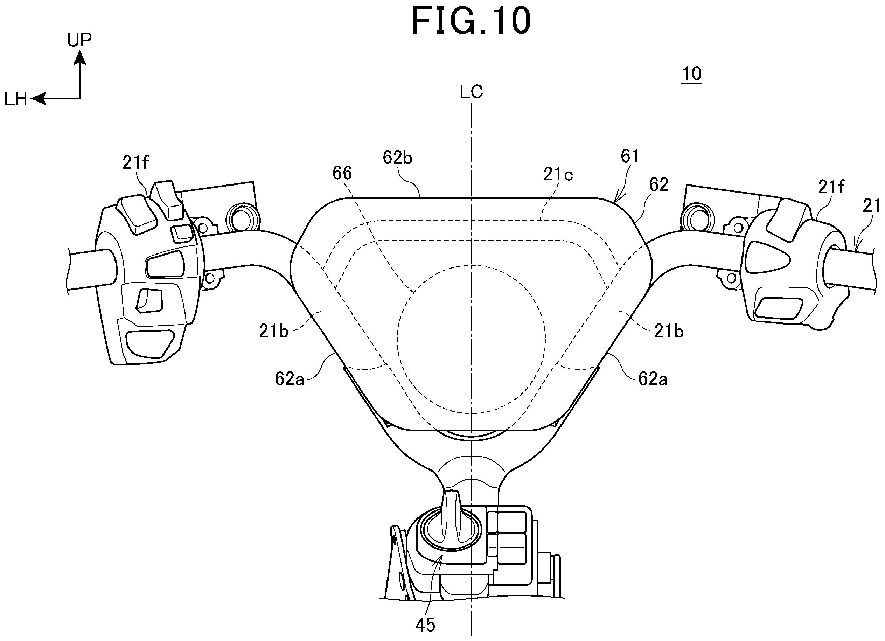

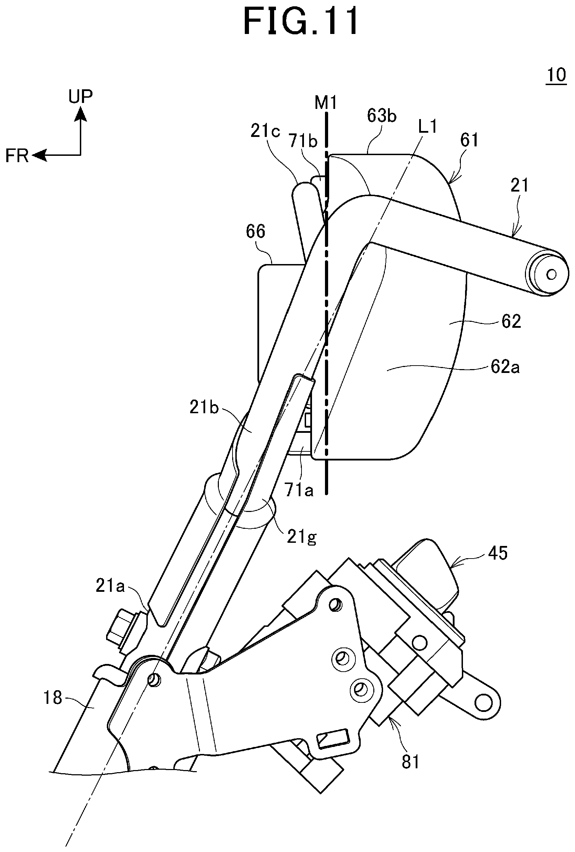

Fig. 10 is a view illustrating, from the rear side, the airbag unit 61 according to a second modification example together with the surrounding configuration. Fig. 11 is a view illustrating, from the lateral side, the airbag unit 61 according to the second modification example together with the surrounding configuration. The second modification example is a view illustrating an example of a configuration in which a part of the airbag unit 61 is disposed in the space between the left and right handle pipe portions 21b and the cross pipe 21c. It is to be noted that configurations similar to those in the above-mentioned embodiment are denoted by the same reference signs, and duplicated explanations thereof will be omitted.

As illustrated in Fig. 10, the airbag unit 61 according to the second modification example is formed of a large size type larger than that of the airbag unit 61 according to the above-mentioned embodiment. In the large size type airbag unit 61, the case 62 is disposed at a position that is on the rear side of the cross pipe 21c and overlaps the cross pipe 21c in the vehicle body front-rear direction. As illustrated in Fig. 11, the airbag unit 61 includes the inflator 66 that protrudes rearward from the case 62, and a part of the inflator 66 is disposed in the space between the left and right handle pipe portions 21b and the cross pipe 21c.

As described above, the space surrounded by the left and right handle pipe portions 21b and the cross pipe 21c is used as a space for a part of the airbag unit 61, and hence it is possible to obtain a handle-installed type airbag that makes it easier to ensure a space for disposing the airbag unit 61, and it becomes easier to ensure the handle rigidity. In addition, the space surrounded by the left and right handle pipe portions 21b and the cross pipe 21c is used as a space for the inflator 66 protruding from the airbag unit 61, and hence it is possible to easily ensure the space for disposing the inflator 66. In this case, the degree of freedom in the shape and the degree of freedom in the arrangement of the inflator 66 are also increased. Further, the case 62 is disposed outside of the space surrounded by the left and right handle pipe portions 21b and the cross pipe 21c, and hence the degree of freedom in the shape of the case 62 is also increased.

Also in the second modification example, at least a part of the airbag unit 61 overlaps the left and right handle pipe portions 21b in vehicle body side view, and hence the handle pipe portions 21b can also serve as guard members that protect the airbag unit 61 from the lateral sides.

Further, a portion of the airbag unit 61 (for example, the case 62) excluding the above-mentioned part is located on the rear side of the cross pipe 21c and overlaps the cross pipe 21c in the vehicle body front-rear direction, and hence it becomes easier to dispose the airbag unit 61 on the handle 21. Further, it is also possible to obtain such an effect that the cross pipe 21c can also serve as a guard member that protects the airbag unit 61 from the front side.

It is to be noted that the fixing structure of the airbag unit 61 to the handle 21 can apply the fixing structure of the above-mentioned embodiment or a publicly-known fixing structure.

Further, in the second modification example, the left and right side surfaces 62a of the case 62 of the airbag unit 61 are formed in a shape that overlaps surfaces along the left and right outer sides of the left and right handle pipe portions 21b in the vehicle body front-rear direction as viewed in the vehicle body front-rear direction illustrated in Fig. 10. This prevents the case 62 from protruding left and right from the left and right handle pipe portions 21b, which makes it easier to dispose the airbag unit 61 in a compact manner on the handle 21.

It is to be noted that the second modification example exemplifies a configuration in which the inflator 66 of the airbag unit 61 is disposed in the space between the left and right handle pipe portions 21b and the cross pipe 21c, but the present invention is not limited to this configuration, and any part of the airbag unit 61 may be disposed in the space between the left and right handle pipe portions 21b and the cross pipe 21c. Further, when at least a part of the airbag unit 61 is disposed in the space between the left and right handle pipe portions 21b and the cross pipe 21c, the arrangement, the shape, and the like of each portion of the airbag unit 61 including the case 62 may be changed as appropriate.

The handle 21 of this embodiment exemplifies a case where the left and right handle pipe portions 21b are configured of an integrated handlebar type, but the present invention is not limited to this configuration, and the shape and the like of the handle 21 may be changed as appropriate. Further, the shape, the position, and the like of the cross pipe 21c may be changed as appropriate as well.

Further, although the present invention has been described as being applied to the saddle-ride vehicle 10 illustrated in Fig. 1 and others, the present invention is not limited thereto. The present invention may be applied to any saddle-ride vehicle. It is to be noted that the saddle-ride vehicle is not limited to a two-wheeled vehicle, and may be a three-wheeled vehicle, a four-wheeled vehicle, or the like.

### [Configurations to be Supported by Above-mentioned Embodiment]

The above-mentioned embodiment supports the following configurations.

(Configuration 1) A saddle-ride vehicle including a head pipe, a handle mounted to the head pipe, and an airbag unit capable of deploying an airbag, in which the handle includes left and right handle pipe portions that extend to outer sides in a vehicle width direction above the head pipe, and a cross pipe that bridges the left and right handle pipe portions, and in which at least a part of the airbag unit is disposed in a space between the left and right handle pipe portions and the cross pipe.

With this configuration, it becomes easier to ensure the space for disposing the airbag unit, and it becomes easier to ensure the handle rigidity.

(Configuration 2) The saddle-ride vehicle according to configuration 1, in which the cross pipe crosses a vehicle body front side relative to a center axis of the head pipe in the vehicle width direction.

With this configuration, when the airbag unit is mounted to the cross pipe, it becomes easier to mount the airbag unit toward the rider on the rear side, and the airbag can easily deploy in a direction appropriate for absorbing an impact on the rider.

(Configuration 3) The saddle-ride vehicle according to configuration 1 or 2, further including a meter on a front side of the handle, in which the cross pipe is located on a rear side relative to a perpendicular line extending from a lower end of an information display region of the meter in a direction perpendicular to the information display region.

With this configuration, it becomes easier to dispose the airbag unit without hindering the visibility of the meter.

(Configuration 4) The saddle-ride vehicle according to any one of configurations 1 to 3, in which the airbag unit is housed in a space between the left and right handle pipe portions and the cross pipe as viewed in a vehicle body front-rear direction.

With this configuration, the airbag unit can be disposed in a compact manner by utilizing a dead space defined between the left and right handle pipe portions and the cross pipe.

(Configuration 5) The saddle-ride vehicle according to any one of configurations 1 to 4, in which the airbag unit is located below the cross pipe, and overlaps the cross pipe in a vehicle body up-down direction.

With this configuration, the cross pipe can also serve as a guard member that protects the airbag unit from directly above.

(Configuration 6) The saddle-ride vehicle according to any one of configurations 1 to 4, in which the airbag unit is located on a rear side of the cross pipe, and overlaps the cross pipe in a vehicle body front-rear direction.

With this configuration, it becomes easier to dispose a large-size airbag unit on the handle, and further, the cross pipe can also serve as a guard member that protects the airbag unit from the front side.

(Configuration 7) The saddle-ride vehicle according to any one of configurations 1 to 6, in which the airbag unit overlaps the left and right handle pipe portions in vehicle body side view.

With this configuration, the handle pipe portions can also serve as guard members that protect the airbag unit from lateral sides.

(Configuration 8) The saddle-ride vehicle according to any one of configurations 1 to 7, further including a reinforcing portion that reinforces lower portions of the left and right handle pipe portions, in which the reinforcing portion includes left and right first fixing portions to which sideward protruding portions protruding left and right from the airbag unit are to be respectively fixed, and in which the cross pipe includes a second fixing portion to which an upward protruding portion protruding upward from the airbag unit is to be fixed.

With this configuration, while the space for disposing the airbag unit is ensured by utilizing the space between the left and right handle pipe portions and the cross pipe, it becomes easier to ensure the support strength for the handle onto the airbag unit.

(Configuration 9) The saddle-ride vehicle according to any one of configurations 1 to 8, in which a common plane passing through fixing locations of the airbag unit to the left and right handle pipe portions and the cross pipe is perpendicular to a ground or has an angle within a predetermined range from an angle perpendicular to the ground.

With this configuration, it becomes easier to dispose the airbag unit such that the airbag can deploy in a direction appropriate for absorbing an impact on the rider on the rear side.

(Configuration 10) The saddle-ride vehicle according to any one of configurations 1 to 3, in which a front portion of the airbag unit is fixed to the cross pipe, and in which the first fixing portions provided on left and right sides of the airbag unit are fixed to the left and right handle pipe portions.

With this configuration, it becomes easier to receive an inflator reaction force at the time of airbag deployment by the cross pipe. In this manner, with the rigidity of the cross pipe being increased, it is possible to sufficiently adapt to the inflator reaction force at the time of airbag deployment.

### [Reference Signs List]

- 10: Saddle-ride vehicle
- 11: Vehicle body frame
- 18: Head pipe
- 21: Handle
- 21a: Steering shaft
- 21b: Handle pipe portion
- 21c: Cross pipe
- 21d: Grip portion
- 21e: Operating lever
- 21f: Handle switch
- 21g: Reinforcing portion
- 30: Vehicle body cover
- 35: Handle cover
- 51: Meter
- 51a: Display surface
- 51k: Substrate
- 52r: Lens cover
- 53: Visor
- 61: Airbag unit
- 62: Case
- 62a: Side surface of case
- 62b: Upper surface of case
- 62c: Front portion of case
- 63a: First stay (sideward protruding portion)
- 63b: Second stay (upward protruding portion)
- 65: Airbag
- 66: Inflator
- 71: Fastening member
- 71a: First fixing portion
- 71b: Second fixing portion
- LC: Vehicle width center
- L1: Center axis of head pipe
- L2: Perpendicular line of substrate 51k
- LC: Vehicle width center
- K1, K2: Fixing location
- M1: Plane passing through fixing locations K1 and K2

## Claims

1. A saddle-ride vehicle comprising a head pipe (18), a handle (21) mounted to the head pipe (18), and an airbag unit (61) capable of deploying an airbag (65),
wherein the handle (21) includes left and right handle pipe portions (21b) that extend to outer sides in a vehicle width direction above the head pipe (18), and a cross pipe (21c) that bridges the left and right handle pipe portions (21b), and
wherein at least a part of the airbag unit (61) is disposed in a space between the left and right handle pipe portions (21b) and the cross pipe (21c).

2. The saddle-ride vehicle according to claim 1,
wherein the cross pipe (21c) crosses a vehicle body front side relative to a center axis (L1) of the head pipe (18) in the vehicle width direction.

3. The saddle-ride vehicle according to claim 1, comprising a meter (51) on a front side of the handle (21),
wherein the cross pipe (21c) is located on a rear side relative to a perpendicular line (L2) extending from a lower end of an information display region of the meter (51) in a direction perpendicular to the information display region.

4. The saddle-ride vehicle according to claim 1,
wherein the airbag unit (61) is housed in a space between the left and right handle pipe portions (21b) and the cross pipe (21c) as viewed in a vehicle body front-rear direction.

5. The saddle-ride vehicle according to any one of claims 1 to 4, wherein the airbag unit (61) is located below the cross pipe (21c), and overlaps the cross pipe (21c) in a vehicle body up-down direction.

6. The saddle-ride vehicle according to any one of claims 1 to 4, wherein a portion of the airbag unit (61) excluding the part is located on a rear side of the cross pipe (21c), and overlaps the cross pipe (21c) in a vehicle body front-rear direction.

7. The saddle-ride vehicle according to any one of claims 1 to 4, wherein the airbag unit (61) overlaps the left and right handle pipe portions (21b) in vehicle body side view.

8. The saddle-ride vehicle according to any one of claims 1 to 4, comprising a reinforcing portion (21g) that reinforces lower portions of the left and right handle pipe portions (21b),
wherein the reinforcing portion (21g) includes left and right first fixing portions (71a) to which sideward protruding portions (63a) protruding left and right from the airbag unit (61) are to be respectively fixed, and
wherein the cross pipe (21c) includes a second fixing portion (71b) to which an upward protruding portion (63b) protruding upward from the airbag unit (61) is to be fixed.

9. The saddle-ride vehicle according to any one of claims 1 to 4, wherein a common plane (M1) passing through fixing locations of the airbag unit (61) to the left and right handle pipe portions (21b) and the cross pipe (21c) is perpendicular to a ground or falls within a predetermined range from an angle perpendicular to the ground.

10. The saddle-ride vehicle according to any one of claims 1 to 3,
wherein a front portion (62c) of the airbag unit (61) is fixed to the cross pipe (21c), and
wherein first fixing portions (71a) provided on left and right sides of the airbag unit (61) are fixed to the left and right handle pipe portions (21b).
